# EUROPEAN PATENT APPLICATION

(11) **EP 4 418 366 A1**
(43) Date of publication of application: **21.08.2024**
(21) Application number: 22881058.6
(22) Date of filing: 12.10.2022
(51) Int. Cl.: H01M 4/587, H01M 4/36, H01M 4/38

(54) **NEGATIVE ELECTRODE MATERIAL, BATTERY, METHOD FOR PRODUCING NEGATIVE ELECTRODE MATERIAL, AND METHOD FOR PRODUCING BATTERY**

(30) Priority: 13.10.2021 JP 2021168446
(71) Applicant: Mitsubishi Materials Corporation, Tokyo 100-8117 (JP)
(72) Inventor: RIKITA, Naoki, Tokyo 100-8117 (JP); NAKADA, Yoshinobu, Saitama-shi, Saitama 330-8508 (JP); TANG, Jie, Tsukuba-shi, Ibaraki 305-0047 (JP); ZHANG, Kun, Tsukuba-shi, Ibaraki 305-0047 (JP)
(74) Representative: Gille Hrabal Partnerschaftsgesellschaft mbB Patentanwälte
(86) International application number: PCT/JP2022/038092
(87) International publication number: WO 2023/063363

(57) **Abstract**

Performance of a negative electrode material is improved. The negative electrode material is a negative electrode material for a battery that includes carbon, sodium tungstate provided on a surface of the carbon, and silicon provided on the surface of the carbon.

## Description

### Field

The present invention relates to a negative electrode material, a battery, a method for producing a negative electrode material, and a method for producing a battery.

### Background

As a negative electrode material for a lithium ion secondary battery, carbon may be used. For example, Patent Literature 1 describes a negative electrode in which tungsten trioxide is disposed on a surface of graphite. By disposing tungsten trioxide on the surface of the graphite, diffusibility of lithium ions can be improved, and the characteristics of the battery such as capacity can be improved.

### Citation List

### Patent Literature

Patent Literature 1: JP 2018-45904 A

### Summary

### Technical Problem

However, in such a negative electrode material, there is room for improvement in performance improvement.

The present invention has been made in view of the above, and an object of the present invention is to provide a negative electrode material having improved performance, a battery, a method for producing a negative electrode material, and a method for producing a battery.

### Solution to Problem

To solve the above problem and achieve the object, a negative electrode material according to the present disclosure is a negative electrode material for a battery and includes: carbon; sodium tungstate provided on a surface of the carbon; and silicon provided on the surface of the carbon.

To solve the above problem and achieve the object, a battery according to the present disclosure includes: the above-described negative electrode material; and a positive electrode material.

To solve the above problem and achieve the object, a method for producing a negative electrode material according to the present disclosure includes the steps of: adding silicon to a first solution containing sodium in which a surfactant is dissolved, to produce a second solution in which silicon is dispersed in the first solution; adding carbon to the second solution to produce a third solution in which carbon is dispersed in the second solution; mixing the third solution and a tungsten solution containing oxygen and tungsten to produce a fourth solution; and producing a negative electrode material by removing a liquid component of the fourth solution.

To solve the above problem and achieve the object, a method for producing a battery according to the present disclosure includes: the above-described method for producing a negative electrode material; and a step of producing a positive electrode material.

### Advantageous Effects of Invention

According to the present invention, the performance of the negative electrode material can be improved.

### Brief Description of Drawings

FIG. 1 is a schematic partial cross-sectional view of a battery according to the present embodiment.
FIG. 2 is a schematic cross-sectional view of an example of a negative electrode according to the present embodiment.
FIG. 3 is a schematic cross-sectional view of another example of a negative electrode according to the present embodiment.
FIG. 4 is a flowchart for explaining an example of a method for producing a battery of the present embodiment.
FIG. 5 is a table showing identification results of the negative electrode material in each example.
FIG. 6 is a diagram showing measurement results of XRD of negative electrode materials in Examples.
FIG. 7 is a view obtained by imaging the negative electrode materials in Examples.
FIG. 8 is a view obtained by imaging the negative electrode materials in Examples.
FIG. 9 is a view obtained by imaging the negative electrode materials in Examples.
FIG. 10 is a view obtained by imaging the negative electrode materials in Examples.

### Description of Embodiments

Hereinafter, an embodiment of the present invention will be described in detail with reference to the drawings. Note that the present invention is not limited by the mode for carrying out the following invention (hereinafter, referred to as an embodiment). In addition, constituent elements in the following embodiments include those that can be easily assumed by those skilled in the art or those that are substantially the same. Furthermore, the constituent elements disclosed in the following embodiments can be appropriately combined.

### Battery

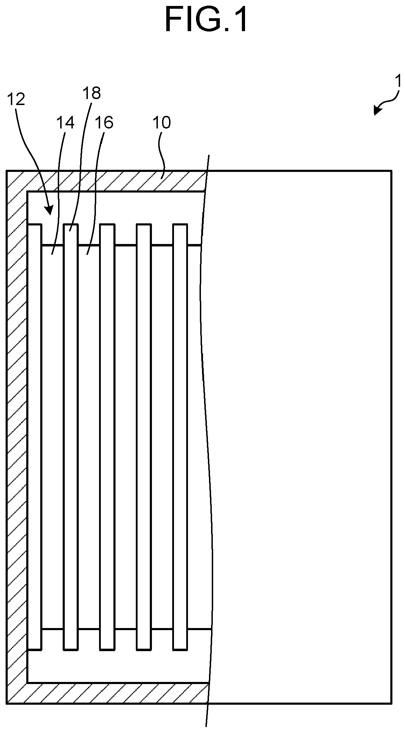

FIG. 1 is a schematic partial cross-sectional view of a battery according to the present embodiment. A battery 1 according to the present embodiment is a lithium ion secondary battery. The battery 1 includes a casing 10, an electrode group 12, and an electrolyte (not illustrated). The casing 10 is a case for storing the electrode group 12 and the electrolyte therein. In addition to the electrode group 12, the casing 10 may include wiring, terminals, and the like connected to the electrode group 12.

The electrode group 12 includes a negative electrode 14, a positive electrode 16, and a separator 18. The electrode group 12 has a configuration in which the separator 18 is disposed between the negative electrode 14 and the positive electrode 16. In the example of FIG. 1, the electrode group 12 has a so-called stacked electrode group structure in which a rectangular negative electrode 14 and a rectangular positive electrode 16 are alternately stacked with a rectangular separator 18 interposed therebetween. However, the electrode group 12 is not limited to the stacked electrode group structure. For example, the electrode group 12 may have a wound electrode group structure in which a strip-shaped negative electrode 14 and a strip-shaped positive electrode 16 are stacked with a strip-shaped separator 18 interposed therebetween and wound.

### Negative Electrode

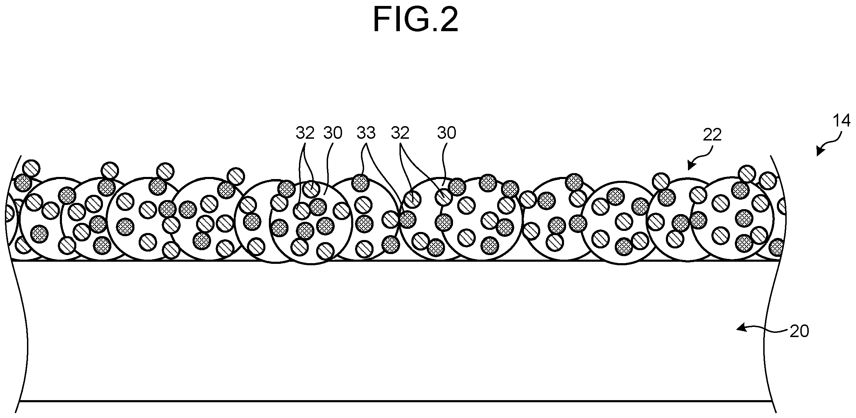

FIG. 2 is a schematic cross-sectional view of an example of a negative electrode according to the present embodiment. As illustrated in FIG. 2, the negative electrode 14 includes a current collecting layer 20 and a negative electrode material layer 22. The current collecting layer 20 is a layer formed of a conductive member. Examples of the conductive member of the current collecting layer 20 include copper. The negative electrode material layer 22 is a layer containing the negative electrode material according to the present embodiment. The negative electrode material layer 22 is provided on a surface of the current collecting layer 20. A thickness of the current collecting layer 20 may be, for example, about 15 µm or more and 40 µm or less, and a thickness of the negative electrode material layer 22 may be, for example, about 20 µm or more and 200 µm or less.

The negative electrode material layer 22 contains a negative electrode material. The negative electrode material includes carbon, sodium tungstate provided on a surface of the carbon, and silicon provided on the surface of the carbon. The sodium tungstate is a tungsten compound represented by NaₓWO_{y}, and x and y are numbers larger than 0. Details of NaₓWO_{y} will be described below.

Note that sodium tungstate may take not only a form of NaₓWO_{y} but also a form such as Na₂WO₄ or Na₅W₁₄O₄₄ in terms of a crystal structure. Note that Na₂WO₄ is represented by the chemical formula of NaₓWO_{y} since the molar ratio of Na is 2, the molar ratio of W is 1, and the molar ratio of O is 4. In addition, since Na₅W₁₄O₄₄ is represented by the chemical formula of Na_{5/14}WO_{44/14} (that is, the molar ratio of Na is 5/14, the molar ratio of W is 1, and the molar ratio of O is 44/14) when the molar ratio of W is converted to 1, it can be said that it is represented by the chemical formula of NaₓWO_{y}. That is, it can be said that sodium tungstate represented by the chemical formula of NaₓWO_{y} refers to sodium tungstate in which a ratio of the molar ratio of Na, the molar ratio of W, and the molar ratio of O is X:1:Y.

More specifically, the negative electrode material of the negative electrode material layer 22 includes carbon particles 30 which are particles of carbon, NaₓWO_{y} (sodium tungstate) particles 32 which are particles of sodium tungstate, and silicon particles 33 which are particles of silicon. Note that the shape of the particle here is not limited to a spherical shape or the like, and may be any shape such as a linear shape or a sheet shape. Furthermore, the shape of the particle surface may be smooth or uneven. In addition, the negative electrode material of the present embodiment may include inevitable impurities in the balance.

The sodium tungstate provided on the surface of the carbon includes at least one of sodium tungstate obtained by directly fixing sodium tungstate to carbon, sodium tungstate obtained by indirectly fixing sodium tungstate to carbon via silicon fixed to carbon, sodium tungstate obtained by indirectly fixing silicon to carbon via sodium tungstate fixed to carbon, and sodium tungstate obtained by directly or indirectly fixing composite particles in which sodium tungstate and silicon are directly fixed to carbon. Note that the negative electrode material in the present embodiment preferably includes at least silicon and carbon to which sodium tungstate is fixed.

The negative electrode material of the negative electrode material layer 22 includes a plurality of carbon particles 30. The carbon particles 30 contain amorphous carbon or graphite.

The amorphous carbon is amorphous carbon having no crystal structure. Amorphous carbon is sometimes called amorphous carbon or diamond-like carbon, and can be said to be carbon in which sp2 bonds and sp3 bonds are mixed. The carbon particles of amorphous carbon are composed of amorphous carbon as a whole, and preferably contain no components other than amorphous carbon except for inevitable impurities. Specifically, it is preferable that the carbon particles of amorphous carbon do not contain graphite.

Graphite is carbon having a planar crystal structure.

An average particle size of the carbon particles 30 is preferably 1 µm or more and 50 µm or less, and more preferably 1 µm or more and 20 µm or less. When the average particle size is within this range, the strength of the electrode film can be maintained.

The negative electrode material of the negative electrode material layer 22 further includes a plurality of NaₓWO_{y} particles 32 and silicon particles 33. More specifically, a plurality of NaₓWO_{y} particles 32 and silicon particles 33 are provided for each carbon particle 30. One NaₓWO_{y} particle 32 of the plurality of NaₓWO_{y} particles 32 is provided on the surface of the carbon particle 30. In addition, the other NaₓWO_{y} particles 32 of the plurality of NaₓWO_{y} particles 32 are provided on the surface of the silicon particles 33. More specifically, the silicon particles 33 are in adhesion (contact) with the surface of the carbon particle 30, and the NaₓWO_{y} particles 32 are in adhesion (contact) with the surface of the silicon particle 33. The carbon particles 30, the NaₓWO_{y} particles 32, and the silicon particles 33 may be made into a composite. Alternatively, the carbon particles 30 and the silicon particles 33 may be made into a composite, and the carbon particles 30 and the NaₓWO_{y} particles 32 may be made into a composite. Therefore, the negative electrode material of the negative electrode material layer 22 has a configuration in which the carbon particles 30, the NaₓWO_{y} particles 32, and the silicon particles 33 are made into a composite, and may further include at least one of a configuration in which the carbon particles 30 and the silicon particles 33 are made into a composite and a configuration in which the carbon particles 30 and the NaₓWO_{y} particles 32 are made into a composite.

Furthermore, sodium tungstate may take not only a form of NaₓWO_{y} but also a form such as Na₂WO₄ or Na₅W₁₄O₄₄ in terms of a crystal structure. Note that Na₂WO₄ is represented by the chemical formula of NaₓWO_{y} since the molar ratio of Na is 2, the molar ratio of W is 1, and the molar ratio of O is 4. In addition, since Na₅W₁₄O₄₄ is represented by the chemical formula of Na_{5/14}WO_{44/14} (that is, the molar ratio of Na is 5/14, the molar ratio of W is 1, and the molar ratio of O is 44/14) when the molar ratio of W is converted to 1, it can be said that it is represented by the chemical formula of NaₓWO_{y}. That is, it can be said that sodium tungstate represented by the chemical formula of NaₓWO_{y} refers to sodium tungstate in which a ratio of the molar ratio of Na, the molar ratio of W, and the molar ratio of O is X:1:Y.

Here, the making into a composite refers to a state in which it is impossible to separate the silicon particles 33 from the carbon particles 30, separate the silicon particles 33 from the NaₓWO_{y} particles 32, and separate the NaₓWO_{y} particles 32 from the carbon particles 30 at least in a case where an external force does not act. For example, the external force refers to a force when a solid electrolyte interphase (SEI) film is formed to cover the entire surface layer and is expanded and contracted when a battery using a negative electrode material is operated.

For example, the making into a composite includes at least one of formation of a composite in which the silicon particles 33 are disposed on the surface of the carbon particle 30 and the NaₓWO_{y} particles 32 are disposed on the surface of the silicon particle 33, formation of a composite in which the NaₓWO_{y} particles 32 are disposed on the surface of the carbon particle 30 and the silicon particles 33 are disposed on the surface of the NaₓWO_{y} particle 32, formation of a composite in which the silicon particles 33 are disposed on the surface of the carbon particle 30, formation of a composite in which the NaₓWO_{y} particles 32 are disposed on the surface of the carbon particle 30, formation a composite in which the NaₓWO_{y} particles 32 are disposed on the surface of the silicon particle 33, and disposition of the NaₓWO_{y} particles 32 and the Si particles 33 on the surface of the carbon particle 30 and adhesion (contact) between the NaₓWO_{y} particles 32 and the Si particles 33.

The NaₓWO_{y} particles 32 included in the negative electrode material of the negative electrode material layer 22 preferably have y (molar ratio of O) of 3, in other words, preferably NaₓWO₃. In addition, in the NaₓWO_{y} particles 32 included in the negative electrode material of the negative electrode material layer 22, x (molar ratio of Na) is preferably more than 0 and 1 or less, and y (molar ratio of O) is preferably 2 or more and 4 or less. In addition, in the NaₓWO_{y} particles 32, it is more preferable that the molar ratio of x is 0.1 or more and 0.95 or less and y is 2.5 or more and 3.5 or less, it is still more preferable that the molar ratio of x is 0.1 or more and 0.95 or less and y is 2.8 or more and 3.2 or less, and it is further still more preferable that the molar ratio of x is 0.3 or more and 0.7 or less and y is 2.8 or more and 3.2 or less. When x and y are in these ranges, the NaₓWO_{y} particles 32 can be appropriately disposed on the surface of the carbon particle 30. Note that the negative electrode material of the negative electrode material layer 22 may include only one type of NaₓWO_{y} particles 32 or may include a plurality of types of NaₓWO_{y} particles 32.

The negative electrode material of the negative electrode material layer 22 preferably includes at least one of Na_{0.78}WO₃ and Na_{0.48}WO₃, Na_{0.72}WO₃ and Na_{0.48}WO₃, Na_{0.44}WO₃, Na_{0.48}WO₃, and Na_{0.52}WO₃, Na₂WO₄, and Na₅W₁₄O₄₄ as the NaₓWO_{y} particles 32. As described above, the negative electrode material of the negative electrode material layer 22 in the present embodiment preferably includes at least one of Na_{0.78}WO₃ and Na_{0.48}WO₃, Na_{0.72}WO₃ and Na_{0.48}WO₃, Na_{0.44}WO₃ and Na_{0.48}WO₃, Na_{0.52}WO₃, Na₂WO₄, and Na₅W₁₄O₄₄ as the sodium tungstate.

The compound included in the negative electrode material such as the NaₓWO_{y} particles 32 can be measured by X-ray diffraction (XRD). The measurement conditions in XRD may be, for example, as follows.
- Measuring apparatus: Ultima IV manufactured by Rigaku Corporation
- Used tube: Cu
- Tube voltage: 40 kV
- Tube current: 40 mA
- Scanning range: 5° to 80°
- Scanning speed: 2°/min
As a database for identifying the compound, ICDD (PDF2.DAT), that is, PDF2.DAT of International Center for Diffraction Data (ICDD) in the powder diffraction/crystal structure database may be used. Then, for a crystal peak detected by XRD, the compound included in the measurement sample (here, the negative electrode material) may be specified using PDXL2 which is integrated powder X-ray diffraction software. Specifically, a compound having a figure of merit (FOM) of a threshold or less may be extracted using the same software, and the compound having the FOM of the threshold or less may be specified as a compound included in the measurement sample (here, the negative electrode material). The FOM takes a value of 0 to 100, and the smaller the value, the higher the matching degree. The threshold of the FOM may be 10. That is, for example, when the FOM of the diffraction peak of the negative electrode material with respect to the diffraction peak of Na_{0.78}WO₃ in ICDD is a threshold (for example, 10) or less, it is determined that Na_{0.78}WO₃ is included in the negative electrode material. For example, when a peak waveform in an X-ray diffraction analysis result of an analyte shows the peak waveform of carbon, the position of the peak waveform identifies it as, for example, a (002) graphite structure. However, if the peak waveform dose not appear and broad, it can be determined that the material is amorphous carbon.

An average particle size of the NaₓWO_{y} particles 32 is smaller than the average particle size of the carbon particles 30. The average particle size of the NaₓWO_{y} particles 32 is preferably 100 nm or more and 20 µm or less, and more preferably 100 nm or more and 1 µm or less.

As described above, the negative electrode material has a structure in which the particulate sodium tungstate (NaₓWO_{y} particles 32) and the silicon (silicon particles 33) are provided on the surface of the carbon particle 30, but is not limited thereto. The negative electrode material may have a structure in which sodium tungstate and silicon are provided on a surface of carbon, and the shape of each of the sodium tungstate and the silicon provided on the surface of the carbon may be arbitrary. In the present embodiment, sodium tungstate was used as the tungsten compound or the tungsten oxide. In addition, in the present embodiment, silicon is used, and a silicon compound or a silicon oxide may be used.

Contents of the sodium tungstate (NaₓWO_{y} particles 32) and the silicon in the negative electrode material can be confirmed by measuring contents of Na, W, O, and Si by fluorescent X-ray analysis. That is, since at least a part of the total amount of Na, W, O, and Si detected by fluorescent X-ray analysis constitutes the sodium tungstate (NaₓWO_{y} particles 32) and the silicon, the contents of the sodium tungstate and the silicon can be confirmed by the contents of Na, W, O, and Si.

The negative electrode material preferably has a content of Na of 0.01% or more and 0.5% or less in terms of a mass ratio, a content of W of 1% or more and 20% or less in terms of a mass ratio, a content of O of 1% or more and 15% or less in terms of a mass ratio, and a content of Si of 1% or more and 15% or less in terms of a mass ratio when measured by fluorescent X-ray analysis. In addition, the negative electrode material more preferably has a content of Na of 0.02% or more and 0.5% or less in terms of a mass ratio, a content of W of 0.7% or more and 17% or less in terms of a mass ratio, a content of O of 2% or more and 13% or less in terms of a mass ratio, and a content of Si of 2% or more and 12% or less in terms of a mass ratio when measured by fluorescent X-ray analysis. In addition, the negative electrode material still more preferably has a content of Na of 0.03% or more and 0.4% or less in terms of a mass ratio, a content of W of 1% or more and 15% or less in terms of a mass ratio, a content of O of 3% or more and 12% or less in terms of a mass ratio, and a content of Si of 3% or more and 10% or less in terms of a mass ratio when measured by fluorescent X-ray analysis. When the contents of Na, W, O, and Si are in these ranges, appropriate amounts of sodium tungstate and silicon are included, and a tungsten compound and silicon can be appropriately disposed on the surface of the carbon.

When the negative electrode material is measured by fluorescent X-ray analysis, the content of C is preferably 60% or more and 95% or less, more preferably 65% or more and 95% or less, and still more preferably 70% or more and 92% or less in terms of a mass ratio. When the content of C is in this range, the tungsten compound can be appropriately attached and disposed on the surface of the carbon.

When the negative electrode material is measured by fluorescent X-ray analysis, Na/W which is a ratio of the content of Na to the content of W is preferably 0.001 or more and 0.2 or less, more preferably 0.005 or more and 0.15 or less, and still more preferably 0.007 or more and 0.15 or less in terms of a mass ratio. In addition, when the negative electrode material is measured by fluorescent X-ray analysis, W/C which is a ratio of the content of W to the content of C is preferably 0.005 or more and 0.3 or less, more preferably 0.008 or more and 0.25 or less, and still more preferably 0.01 or more and 0.2 or less in terms of a mass ratio. In addition, when the negative electrode material is measured by fluorescent X-ray analysis, Si/O which is a ratio of the content of Si to the content of O is preferably 0.1 or more and 2 or less, more preferably 0.2 or more and 1.5 or less, and still more preferably 0.3 or more and 1.3 or less in terms of a mass ratio. When the ratios of the contents are in these ranges, the tungsten compound can be appropriately attached and disposed on the surface of the carbon.

When the negative electrode material is measured by fluorescent X-ray analysis, Si/W which is a ratio of the content of Si to the content of W is preferably 0.1 or more and 15 or less, more preferably 0.15 or more and 12 or less, and still more preferably 0.2 or more and 10 or less in terms of a mass ratio. In addition, when the negative electrode material is measured by fluorescent X-ray analysis, Si/C which is a ratio of the content of Si to the content of C is preferably 0.01 or more and 0.3 or less, more preferably 0.02 or more and 0.25 or less, and still more preferably 0.03 or more and 0.15 or less in terms of a mass ratio. When the ratios of the contents are in these ranges, the tungsten compound and the silicon can be appropriately attached and disposed on the surface of the carbon.

The fluorescent X-ray analysis may be performed using a wavelength dispersive fluorescent X-ray analyzer, and the measurement conditions may be as follows.
- Measuring apparatus: ZSX PrimusIV manufactured by Rigaku Corporation
- Tube voltage: 30 kV
- Tube current: 100 mA
As a measurement method, a standardless fundamental parameter method may be used, and for analysis, the SQX scattered radiation FP method from Rigaku Corporation may be used.

Note that the negative electrode material layer 22 may contain a substance other than the negative electrode material (carbon particles 30, NaₓWO_{y} particles 32, and silicon particles 33). The negative electrode material layer 22 may contain, for example, a binder. A material of the binder may be any material, and examples thereof include polyvinylidene fluoride (PVDF), carboxymethyl cellulose (CMC), styrene butadiene rubber (SBR), and polyacrylic acid (PAA). The binders may be used alone or in combination of two or more. However, in a case where the carbon particles 30 are amorphous carbon, it is preferable that the negative electrode material layer 22, in other words, the negative electrode material does not include graphite.

In addition, the disposition of the NaₓWO_{y} particles 32 and the silicon particles 33 on the surface of the carbon particle 30 can be confirmed by observation with an electron microscope such as a scanning electron microscope (SEM) or a transmission electron microscope (TEM).

### Modification of Negative Electrode

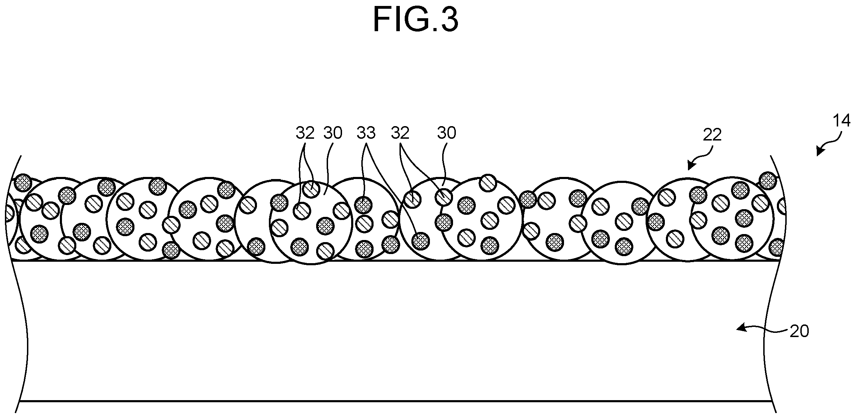

FIG. 3 is a schematic cross-sectional view of another example of a negative electrode according to the present embodiment. In the negative electrode material of the negative electrode material layer 22, the silicon particles 33 may be in adhesion (contact) with the surface of the carbon particle 30, and the NaₓWO_{y} particles 32 may be in adhesion (contact) with the surface of the carbon particle 30. In this case, the carbon particles 30 and the silicon particles 33 may be made into a composite, and the carbon particles 30 and the NaₓWO_{y} particles 32 may be made into a composite.

The NaₓWO_{y} particles 32 preferably have a cubic crystal structure and a tetragonal crystal structure. That is, the negative electrode material includes at least one of sodium tungstate having a cubic crystal structure and sodium tungstate having a tetragonal crystal structure. However, the crystal structure of sodium tungstate included in the negative electrode material is not limited thereto, and for example, sodium tungstate having another crystal structure such as a triclinic crystal may be included.

As described above, the negative electrode material has a structure in which the particulate sodium tungstate (NaₓWO_{y} particles 32) and the silicon particles 33 are provided on the surface of the carbon particle 30, but is not limited thereto. The negative electrode material may have a structure in which sodium tungstate and silicon are provided on a surface of carbon, and the shape of each of the sodium tungstate and the silicon provided on the surface of the carbon may be arbitrary.

### Positive Electrode

The positive electrode 16 includes a current collecting layer and a positive electrode material layer. The current collecting layer of the positive electrode 16 is a layer formed of a conductive member, and examples of the conductive member here include aluminum. The positive electrode material layer is a layer of a positive electrode material, and is provided on a surface of the current collecting layer of the positive electrode 16. A thickness of the current collecting layer of the positive electrode may be, for example, about 10 µm or more and 30 µm or less, and a thickness of the positive electrode material layer may be, for example, about 10 µm or more and 100 µm or less.

The positive electrode material layer contains a positive electrode material. The positive electrode material includes particles of a lithium compound which is a compound containing lithium. The lithium compound may be a lithium-containing metal oxide, a lithium-containing phosphate, or the like. More specifically, examples of the lithium compound include LiCoO₂, LiNiO₂, LiMnO₂, LiMn₂O₄, LiNiₐCo_{b}Mn_{c}O₂ (where 0 < a < 1, 0 < b < 1, 0 < c < 1, and a + b + c = 1), and LiFePO₄. The lithium compound may contain only one kind of material or two or more kinds of materials. In addition, the positive electrode material layer may contain a substance other than the positive electrode material, and may contain, for example, a binder. The material of the binder may be any material, and examples thereof include polyvinylidene fluoride (PVDF), polytetrafluoroethylene (PTFE), and PAA. The binders may be used alone or in combination of two or more.

### Separator

The separator 18 is an insulating member. In the present embodiment, the separator 18 is, for example, a porous film formed of a resin, and examples of the resin include polyethylene (PE) and polypropylene (PP). In addition, the separator 18 may have a structure in which films of different materials are stacked. In addition, the separator 18 may include a separator 13 and a heat resistant layer. The heat resistant layer is a layer containing a substance having a high melting point. The heat resistant layer may include, for example, particles of an inorganic material such as alumina.

### Electrolyte

The electrolyte provided in the battery 1 is a nonaqueous electrolyte. Voids in the electrode group 12 are impregnated with the electrolyte. The electrolyte contains, for example, a lithium salt and an aprotic solvent. The lithium salt is dispersed and dissolved in an aprotic solvent. Examples of the lithium salt include LiPF₆, LiBF₄, Li[N(FSO₂)₂], Li[N(CF₃SO₂)₂], Li[B(C₂O₄)₂], and LiPO₂F₂. The aprotic solvent may be, for example, a mixture of a cyclic carbonate ester and a chain carbonate ester. Examples of the cyclic carbonate ester include EC, PC, and butylene carbonate. Examples of the chain carbonate ester include dimethyl carbonate (DMC), ethyl methyl carbonate (EMC), and diethyl carbonate (DEC).

### Method for Producing Battery

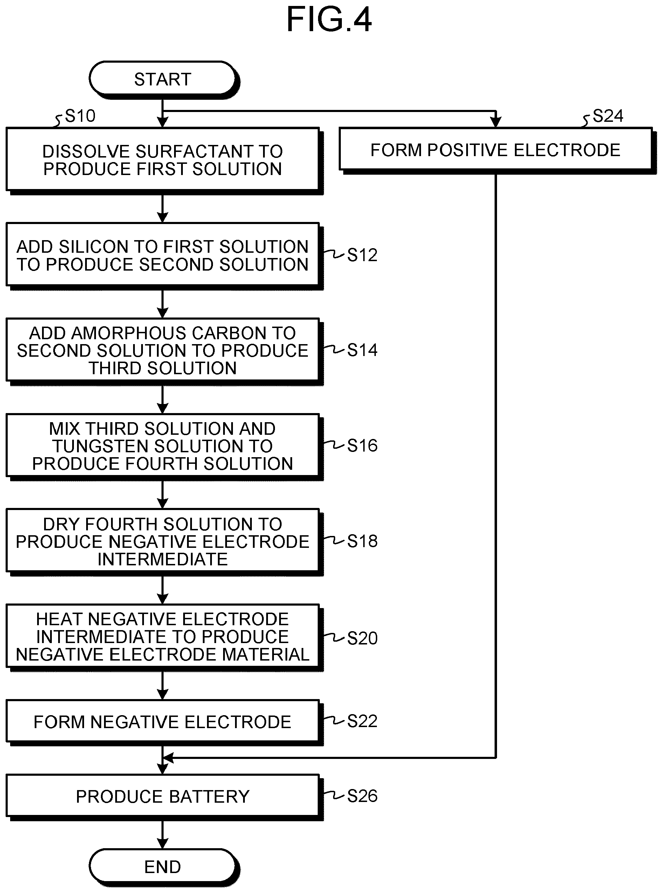

Next, an example of a method for producing the battery 1 according to the present embodiment will be described. FIG. 4 is a flowchart for explaining an example of a method for producing a battery of the present embodiment. As illustrated in FIG. 4, in the present production method, the negative electrode 14 is formed in Step S10 to Step S22.

Specifically, a surfactant is dissolved in a solvent to produce a first solution (Step S10). The first solution is a solution in which a surfactant is dissolved and Na (Na in an ionic state) is contained. The surfactant is used to disperse carbon and silicon. As the surfactant, any substance capable of dispersing carbon may be used, and in the present embodiment, a substance containing Na is used. As the surfactant containing Na, for example, sodium dodecyl sulfate (SDS) may be used. The solvent of the first solution may be any solvent that dissolves the surfactant, and for example, water may be used.

Note that the surfactant is not limited to a surfactant containing Na. In this case, for example, a surfactant not containing Na and a compound containing Na may be dissolved in a solvent to produce the first solution. As the surfactant not containing Na, for example, poly(oxyethylene) alkyl ether, polyoxyethylene nonylphenyl ether, or the like may be used. As the poly(oxyethylene) alkyl ether, poly(oxyethylene) alkyl ether having an alkyl group having 12 or more and 15 or fewer carbon atoms is preferably used, and for example, C₁₂H₂₅O(C₂H₄)ₙH (poly (oxyethylene) dodecyl ether), C₁₃H₂₇O(C₂H₄)ₙH (poly (oxyethylene) tridecyl ether), C₁₃H₂₇O(C₂H₄)ₙH (poly (oxyethylene) isotridecyl ether), C₁₄H₂₅O(C₂H₄)ₙH (poly (oxyethylene) tetradecyl ether), C₁₅₅H₂₅O(C₂H₄)ₙH (poly (oxyethylene) pentadecyl ether), or the like may be used. Here, n is an integer of 1 or more. As the polyoxyethylene nonylphenyl ether, for example, C₉H₁₉C₆(CH₂CH₂O)₈H, C₉H₁₉C₆(CH₂CH₂O)₁₀H, C₉H₁₉C₆(CH₂CH₂O)₁₂H, or the like may be used. As the compound containing Na, for example, sodium sulfate, sodium stearate, sodium hyaluronate, sodium hypochlorite, or the like may be used.

A content of the surfactant in the first solution, that is, the amount of the surfactant added is preferably 0.1% or more and 10% or less, more preferably 0.5% or more and 7% or less, and still more preferably 1% or more and 5% or less in terms of a mass ratio with respect to the amount of the carbon raw material added in the subsequent Step S14. In this numerical range, the affinity between carbon and NaₓWO_{y} can be appropriately improved.

Next, a silicon raw material is added to the first solution to produce a second solution (Step S12). The silicon raw material is silicon used as a raw material. In Step S12, first, a silicon raw material is charged into a solvent to produce a silicon solution. In the present embodiment, water is used as the solvent. Then, the silicon solution is added to the first solution and stirred to produce a second solution.

A content of the silicon in the first solution, that is, the amount of the silicon added is preferably 1% or more and 10% or less, more preferably 2% or more and 8% or less, and still more preferably 3% or more and 6% or less in terms of a mass ratio with respect to the amount of the carbon raw material added in the subsequent Step S14.

Next, a carbon raw material is added to the second solution to produce a third solution (Step S14). The carbon raw material is amorphous carbon used as a raw material. An average particle size of the carbon raw material is, for example, preferably 1 µm or more and 50 µm or less, and more preferably 1 µm or more and 20 µm or less. When the average particle size of the carbon raw material is in this range, the capacity of the battery can be increased. In Step S14, the second solution to which the carbon raw material is added, that is, the third solution is stirred to disperse the carbon raw material in the second solution. That is, the third solution can be said to be the second solution in which the carbon raw material is dispersed.

The carbon raw material may be produced, for example, by an oil furnace method. In the oil furnace method, for example, a raw material oil is sprayed into a high-temperature atmosphere to be thermally decomposed, and then rapidly cooled to produce a particulate amorphous carbon raw material. However, the method for producing the carbon raw material is not limited thereto, and may be any method.

Next, the third solution and a tungsten solution are mixed to produce a fourth solution (Step S16). The tungsten solution is a solution containing W and O. The tungsten solution is, for example, a solution produced by dissolving a tungsten oxide raw material in a solvent. The tungsten oxide raw material here is a raw material of the NaₓWO_{y} particles 32, and for example, tungsten trioxide is used. As the solvent, for example, an alkaline liquid is used, and in the present embodiment, an aqueous ammonia solution is used. Therefore, in the present embodiment, the tungsten solution is an alkaline solution containing W and O, more specifically, ammonium tungstate. However, the tungsten solution may be any solution containing W and O.

A content of W contained in the tungsten solution added to the second solution, that is, the amount of W added is preferably 0.5% or more and 20% or less, more preferably 1% or more and 15% or less, and still more preferably 1.3% or more and 10% or less in terms of a mass ratio with respect to the amount of the carbon raw material added in Step S14. In this numerical range, the affinity between carbon and NaₓWO_{y} can be appropriately improved. In addition, in this range, the NaₓWO_{y} particles 32 can be appropriately formed on the surface of the carbon particle 30 to increase the capacity of the battery as a negative electrode.

Next, a liquid component of the fourth solution is removed to produce a negative electrode material (negative electrode material production step). In the present embodiment, Steps S18 and S20 are executed as the negative electrode material production steps. Specifically, the fourth solution is dried to produce a negative electrode intermediate (Step S18; drying step). In Step S18, for example, the liquid component contained in the fourth solution is removed, that is, evaporated by drying the fourth solution at 80°C for 12 hours in the atmosphere. However, the drying conditions may be arbitrary. It can be said that the negative electrode intermediate contains a solid component remaining after the liquid component of the fourth solution is removed.

Next, the dried negative electrode intermediate is heated to produce a negative electrode material (Step S20; heating step). By heating the negative electrode intermediate, a negative electrode material in which the NaₓWO_{y} particles 32 are provided on the surface of the silicon particle 33 is formed. That is, Na, W, and O in an ionic state contained in the third solution are precipitated as the NaₓWO_{y} particles 32 on the surface of the carbon particle 30 dispersed in the fourth solution, and a negative electrode material is formed.

The conditions for heating the negative electrode intermediate in the heating step may be arbitrary, and the heating step is preferably performed as follows. That is, the heating step preferably includes a step of putting the negative electrode intermediate into a furnace to make the inside of the furnace an inert atmosphere, a first heating step of heating the negative electrode intermediate to a first temperature at a first heating rate, and a second heating step of heating the negative electrode intermediate heated to the first temperature to a second temperature at a second heating rate.

The inert atmosphere in the step of making the inside of the furnace an inert atmosphere may be, for example, a nitrogen atmosphere or a rare gas atmosphere such as Ar. For example, the inert atmosphere may be created by replacing oxygen in the furnace with nitrogen or a rare gas. Note that this step is not essential.

The first heating step is a step of removing metals, organic substances, and the like contained in the negative electrode intermediate. The first heating temperature in the first heating step is, for example, 550°C, but is not limited thereto, and is preferably 150°C or higher and 625°C or lower, preferably 175°C or higher and 600°C or lower, and more preferably 200°C or higher and 575°C or lower. The first heating rate may be any rate. For example, the first heating rate is preferably 45°C/hour or more and 75°C/hour or less, more preferably 50°C/hour or more and 70°C/hour or less, and still more preferably 55°C/hour or more and 65°C/hour or less. When the first heating temperature and the first heating rate are in these ranges, metals, organic substances, and the like contained in the negative electrode intermediate can be appropriately removed.

The second heating step is a step of producing NaₓWO_{y} after the first heating step. The second heating temperature in the second heating step is higher than the first heating temperature, for example, 700°C, but is not limited thereto, and is preferably 680°C or higher and 750°C or lower, preferably 685°C or higher and 740°C or lower, and more preferably 690°C or higher and 730°C or lower. The second heating rate may be any rate. The second heating rate is preferably higher than the first heating rate, and for example, is preferably 165°C/hour or more and 195°C/hour or less, more preferably 170°C/hour or more and 190°C/hour or less, and still more preferably 175°C/hour or more and 185°C/hour or less. When the second heating temperature and the second heating rate are in these ranges, NaₓWO_{y} can be appropriately produced while shortening the time required for the process.

In the second heating step, the negative electrode intermediate heated to the second heating temperature is preferably held at the second heating temperature for a predetermined time. The holding time here is preferably 1.25 hours or longer and 2.75 hours or shorter, more preferably 1.5 hours or longer and 2.5 hours or shorter, and still more preferably 1.75 hours or longer and 2.25 hours or shorter.

Note that the step of heating the negative electrode intermediate to the third temperature at the third heating rate and holding the negative electrode intermediate at the third temperature for a predetermined time may be provided before the first heating step (and after the step of creating the inert atmosphere in the present embodiment). The third temperature is lower than the first temperature, and is, for example, 100°C, but is not limited thereto, and is preferably 80°C or higher and 120°C or lower, preferably 85°C or higher and 115°C or lower, and more preferably 90°C or higher and 110°C or lower. The third heating rate may be any rate. For example, the third heating rate is preferably 165°C/hour or more and 195°C/hour or less, more preferably 170°C/hour or more and 190°C/hour or less, and still more preferably 175°C/hour or more and 185°C/hour or less. In addition, the predetermined time for holding at the third heating temperature may also be arbitrary, and for example, is preferably 0.5 hours or longer and 1.75 hours or shorter, more preferably 0.75 hours or longer and 1.5 hours or shorter, and still more preferably 1.0 hour or longer and 1.25 hours or shorter. By providing this step, moisture can be appropriately removed.

Next, the negative electrode 14 is formed using the formed negative electrode material (Step S22). That is, the negative electrode material layer 22 containing a negative electrode material is formed on the surface of the current collecting layer 20 to form the negative electrode 14.

In addition, in the present production method, the positive electrode 16 is formed (Step S24). In Step S24, a positive electrode material may be formed by the same method as in Steps S10 to S20 except that a lithium compound raw material which is a lithium compound is used instead of the carbon raw material. Then, a positive electrode material layer containing a positive electrode material is formed on the surface of the current collecting layer for the positive electrode 16 to form the positive electrode 16.

After the negative electrode 14 and the positive electrode 16 are formed, the battery 1 is produced using the negative electrode 14 and the positive electrode 16 (Step S26). Specifically, the negative electrode 14, the separator 18, and the positive electrode 16 are stacked to form the electrode group 12, and the electrode group 12 and the electrolyte are housed in the casing 10 to produce the battery 1.

As described above, in the present embodiment, as shown in Steps S10 to S20, the fourth solution in which Na, O, W, and Si are contained and carbon is dispersed is produced, and the liquid component is removed from the fourth solution to produce the negative electrode material. Hereinafter, such a method for producing a negative electrode material is appropriately referred to as a solution method. The above production method is referred to as a first production method.

As described above, the negative electrode material for a battery according to the present embodiment includes carbon, sodium tungstate provided on a surface of the carbon, and silicon provided on the surface of the carbon. The negative electrode material according to the present embodiment can improve battery characteristics such as capacity by providing sodium tungstate and silicon on the surface of the carbon.

It is known that battery characteristics are improved by including silicon in a negative electrode material for a battery. However, it is known that it is difficult to provide silicon on the surface of the carbon in the negative electrode material. In the present embodiment, a negative electrode material including silicon provided on the surface of the carbon can be produced by a solution method using a raw material including carbon, sodium tungstate, and silicon.

In addition, in a negative electrode material in which sodium tungstate is provided on a surface of carbon, it is required that sodium tungstate is appropriately disposed on the surface of the carbon. In a case where sodium tungstate cannot be appropriately disposed on the surface of the carbon, that is, in a case where sodium tungstate is not provided on the surface of the carbon or sodium tungstate is separated from the surface of the carbon, the battery characteristics cannot be appropriately improved. On the other hand, in the negative electrode material according to the present embodiment, amorphous carbon is used as carbon, and sodium tungstate is provided on a surface of the amorphous carbon. The amorphous carbon can contain a functional group on the surface when sodium tungstate is disposed on the surface. Therefore, sodium tungstate can be appropriately trapped on the surface of the amorphous carbon by the functional group, and sodium tungstate can be appropriately disposed on the surface. In addition, the amorphous carbon can contain a functional group (for example, a hydroxy group and a carboxyl group) on the surface when sodium tungstate is disposed on the surface. Therefore, sodium tungstate can be appropriately trapped on the surface of the amorphous carbon by the functional group, and tungsten trioxide can be appropriately disposed. In addition, since sodium tungstate is fixed to the surface of the amorphous carbon by the functional group, adhesion of the sodium tungstate to the surface of the amorphous carbon can be increased, and separation of the sodium tungstate from the surface of the carbon can be suppressed. In particular, since a hard carbon raw material is produced at a temperature lower than that of, for example, graphite, it is easy to remain without removing the functional group, and sodium tungstate and silicon can be appropriately disposed on the surface.

The negative electrode material according to the present embodiment is preferably a composite of carbon, sodium tungstate, and silicon. In the present embodiment, sodium tungstate and silicon can be appropriately disposed on the surface of the carbon.

In addition, in the negative electrode material according to the present embodiment, sodium tungstate is represented by a chemical formula of NaₓWO_{y}, x is preferably more than 0 and 1 or less, and y is preferably 2 or more and 4 or less. By including sodium tungstate of such a chemical formula, sodium tungstate can be appropriately disposed on the surface of the carbon.

In addition, the negative electrode material according to the present embodiment preferably has a content of sodium of 0.01% or more and 0.5% or less in terms of a mass ratio, a content of tungsten of 0.5% or more and 20% or less in terms of a mass ratio, and a content of oxygen of 1% or more and 15% or less in terms of a mass ratio when measured by fluorescent X-ray analysis. When Na, W, and O are in these ranges, sodium tungstate is appropriately included, and thus, sodium tungstate can be appropriately disposed on the surface of the carbon.

In addition, the negative electrode material according to the present embodiment preferably has Na/W, which is a content ratio of sodium to tungsten, of 0.001 or more and 0.2 or less when measured by fluorescent X-ray analysis. When Na/W is in this range, sodium tungstate is appropriately included, and thus, sodium tungstate can be appropriately disposed on the surface of the carbon.

In the negative electrode material according to the present embodiment, the carbon is preferably amorphous carbon or graphite. According to the present embodiment, sodium tungstate and silicon can be appropriately disposed on a surface of amorphous carbon or graphite.

The negative electrode material according to the present embodiment includes sodium tungstate having at least one crystal structure of a tetragonal crystal, a cubic crystal, and an orthorhombic crystal. Such a crystal structure allows sodium tungstate to be appropriately disposed on the surface of the carbon.

In the negative electrode material according to the present embodiment, sodium tungstate is represented by a chemical formula of NaₓWO_{y}, x is more than 0 and 1 or less, and y is 2 or more and 4 or less. By including sodium tungstate of such a chemical formula, sodium tungstate can be appropriately disposed on the surface of the carbon.

The negative electrode material according to the present embodiment preferably has a content of sodium of 0.01% or more and 0.5% or less in terms of a mass ratio, a content of tungsten of 1% or more and 20% or less in terms of a mass ratio, a content of oxygen of 1% or more and 15% or less in terms of a mass ratio, and a content of silicon of 1% or more and 15% or less in terms of a mass ratio when measured by fluorescent X-ray analysis. When Na, W, O, and Si are in these ranges, sodium tungstate is appropriately included, and thus, sodium tungstate can be appropriately disposed on the surface of the carbon.

The negative electrode material according to the present embodiment has Na/W, which is a content ratio of sodium to tungsten, of 0.001 or more and 0.2 or less when measured by fluorescent X-ray analysis. When Na/W is in this range, sodium tungstate is appropriately included, and thus, sodium tungstate can be appropriately disposed on the surface of the carbon.

The negative electrode material according to the present embodiment has Si/C, which is a content ratio of silicon to carbon, of 0.01 or more and 0.3 or less when measured by fluorescent X-ray analysis. When Si/C is in this range, sodium tungstate is appropriately included, and thus, sodium tungstate can be appropriately disposed on the surface of the carbon.

The negative electrode material according to the present embodiment has W/C, which is a content ratio of tungsten to carbon, of 0.005 or more and 0.3 or less when measured by fluorescent X-ray analysis. When W/C is in this range, sodium tungstate is appropriately included, and thus, sodium tungstate can be appropriately disposed on the surface of the carbon.

The negative electrode material according to the present embodiment has Si/W, which is a content ratio of silicon to tungsten, of 0.1 or more and 15 or less when measured by fluorescent X-ray analysis. When Si/W is in this range, sodium tungstate is appropriately included, and thus, sodium tungstate can be appropriately disposed on the surface of the carbon.

The negative electrode material according to the present embodiment has Si/O, which is a content ratio of silicon to oxygen, of 0.1 or more and 2 or less when measured by fluorescent X-ray analysis. When Si/O is in this range, sodium tungstate is appropriately included, and thus, sodium tungstate can be appropriately disposed on the surface of the carbon.

In addition, a method for producing a negative electrode material according to the present embodiment includes a step of adding silicon to a first solution containing sodium in which a surfactant is dissolved, to produce a second solution in which silicon is dispersed in the first solution; a step of adding amorphous carbon to the second solution to produce a third solution in which amorphous carbon is dispersed in the second solution; a step of mixing the third solution and a tungsten solution containing oxygen and tungsten to produce a fourth solution; and a step of producing a negative electrode material by removing a liquid component of the fourth solution. By producing a negative electrode material using a method for producing a negative electrode according to the present embodiment, it is possible to appropriately dispose sodium tungstate and silicon on the surface of the carbon.

In addition, in the method for producing a negative electrode material according to the present embodiment, the amount of W added is preferably 0.5% or more and 20% or less, more preferably 1% or more and 15% or less, and still more preferably 1.3% or more and 10% or less in terms of a mass ratio with respect to the amount of the carbon raw material added in Step S14. When the amount of W added is in this range, sodium tungstate can be appropriately formed on a surface of hard carbon, and the battery characteristics can be improved as a negative electrode.

In addition, the negative electrode material production step preferably includes a drying step of drying the fourth solution to produce a negative electrode intermediate and a heating step of heating the negative electrode intermediate. By heating the negative electrode intermediate formed by drying the fourth solution to produce a negative electrode material, sodium tungstate can be appropriately formed on the surface of the carbon, and the battery characteristics can be improved as a negative electrode.

In addition, the heating step preferably includes a step of heating the negative electrode intermediate to a first temperature of 150°C or higher and 625°C or lower at a first heating rate, a step of heating the negative electrode intermediate heated to the first temperature, to a second temperature of 680°C or higher and 750°C or lower at a second heating rate higher than the first heating rate, and a step of holding the negative electrode intermediate at the second temperature. By forming the negative electrode material through the first heating step and the second heating step, sodium tungstate can be appropriately formed on the surface of the carbon.

### Examples

Next, Examples will be described.

### Example 1

In Example 1, a negative electrode material was produced by the solution method described in the embodiment. Specifically, as a first solution, a solution in which SDS was dissolved using water as a solvent and a surfactant was prepared. A concentration of SDS in the first solution was set to 4.85%. Then, a silicon raw material was added to the first solution so that a mass ratio of the silicon raw material in the first solution to the amorphous carbon raw material to be added was 4.85%, and the mixture was stirred to obtain a second solution. Then, an amorphous carbon raw material was added to the second solution so that a mass ratio of SDS in the second solution to the amorphous carbon raw material to be added was 3%, and the mixture was stirred to obtain a third solution. Then, ammonium tungstate (tungsten solution) was added to the third solution so that the amount of W contained in the ammonium tungstate (tungsten solution) with respect to the amorphous carbon raw material in the third solution was 5% in terms of a mass ratio, thereby obtaining a fourth solution. Then, the fourth solution was stirred, and then moisture was evaporated by heating and dried to produce a negative electrode intermediate. Then, the negative electrode intermediate was introduced into a tubular furnace (firing furnace), and heated to 550°C (first heating temperature) at a first heating rate of 60°C/hour under an argon atmosphere. After reaching the first heating temperature, the temperature was raised to 700°C (second heating temperature) at a second heating rate of 180°C/hour and held for 2 hours. After holding for 2 hours, the heating was stopped and the temperature was naturally lowered to 50°C to produce a negative electrode material.

In addition, in Example 1, a silicon raw material was produced as follows. First, a high-purity silicon chunk (purity: 11 N) of several mm was pulverized using a jaw crusher, and then the pulverized silicon particles were separated using a sieve having a mesh size of 0.5 mm. Next, the silicon particles passed through a sieve with a mesh size of 0.5 mm were put into a spherical ball mill and pulverized for 6 hours to obtain silicon fine particles (silicon raw material). The particle size distribution of the obtained silicon fine particles was determined by a laser diffraction scattering type particle size distribution measurement method (apparatus product name "Microtrac MT3300EXII"). A volume average particle size of the silicon fine particles was 1.92 µm, and d50 (median diameter) was 0.31 µm. In addition, a maximum volume diameter and a minimum volume diameter of the silicon fine particles were 32.23 µm and 0.066 µm, respectively.

### Example 2

In Example 2, a negative electrode material was produced in the same manner as in Example 1, except that the pulverization time was set to 3 hours, and the amounts of silicon, tungsten, and SDS added were set to 4 wt%, 2 wt%, and 1 wt%, respectively.

### Example 3

In Example 3, a negative electrode material was produced in the same manner as in Example 1, except that the pulverization time was set to 4 hours, and the amounts of silicon, tungsten, and SDS added were set to 4 wt%, 15 wt%, and 5 wt%, respectively.

### Example 4

In Example 4, a negative electrode material was produced in the same manner as in Example 1, except that the shape of the container used for pulverization was a long body container, the pulverization time was set to 2 hours, and the amounts of silicon, tungsten, and SDS added were set to 4 wt%, 10 wt%, and 5 wt%, respectively.

### Example 5

In Example 5, a negative electrode material was produced in the same manner as in Example 1, except that the shape of the container used for pulverization was a long body container, the pulverization time was set to 1 hour, and the amounts of silicon, tungsten, and SDS added were set to 10 wt%, 2 wt%, and 2 wt%, respectively.

### Example 6

In Example 6, a negative electrode material was produced in the same manner as in Example 1, except that the shape of the container used for pulverization was a long body container, the pulverization time was set to 3 hours, and the amounts of silicon, tungsten, and SDS added were set to 3 wt%, 4 wt%, and 10 wt%, respectively.

### Example 7

In Example 7, a negative electrode material was produced in the same manner as in Example 1, except that the shape of the container used for pulverization was a long body container, the pulverization time was set to 2 hours, the concentration of C₁₂H₂₅O(C₂H₄)ₙH (poly(oxyethylene) dodecyl ether) added as a surfactant in the first solution was set to 4%, and the concentration of sodium stearate added was set to 1%.

### Comparative Example 1

In Comparative Example 1, only carbon was used as a negative electrode material.

### Identification of Negative Electrode Material

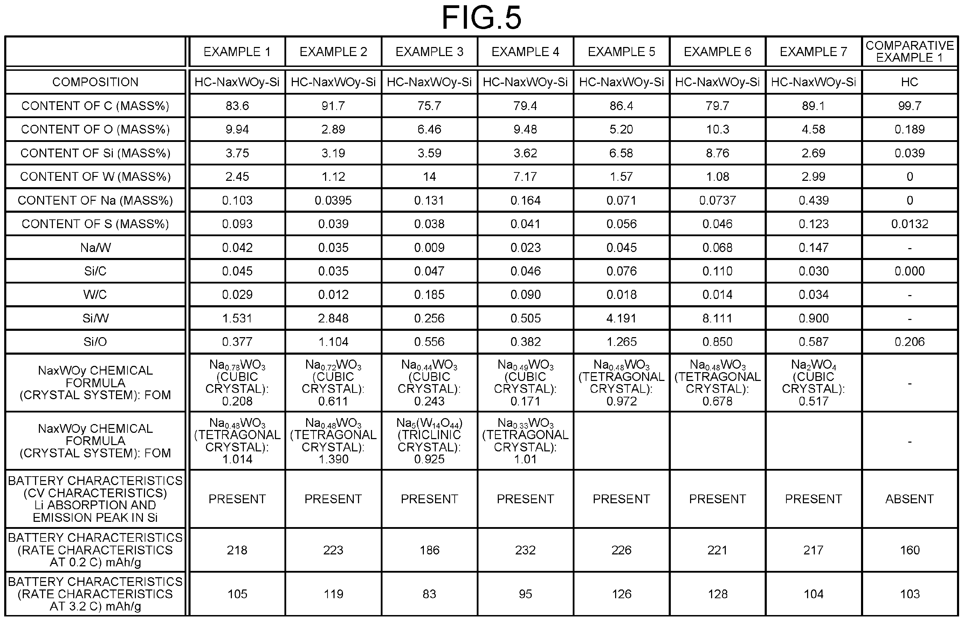

FIG. 5 is a table showing identification results of the negative electrode material in each example. The negative electrode material produced in each example was subjected to fluorescent X-ray analysis to measure the content of elements contained in the negative electrode material and Na/W, Si/C, W/C, Si/W, and Si/O. The measurement results of the contents of the elements are illustrated in FIG. 5. Note that as the measurement conditions of the fluorescent X-ray analysis, the conditions described in the above embodiment were used.

The negative electrode materials of Examples 1 to 7 also include elements (here, S) other than C derived from carbon, Na, W, and O derived from sodium tungstate, and Si derived from silicon, but these elements are impurities. In addition, inevitable impurities may be included in addition to the elements listed in FIG. 5.

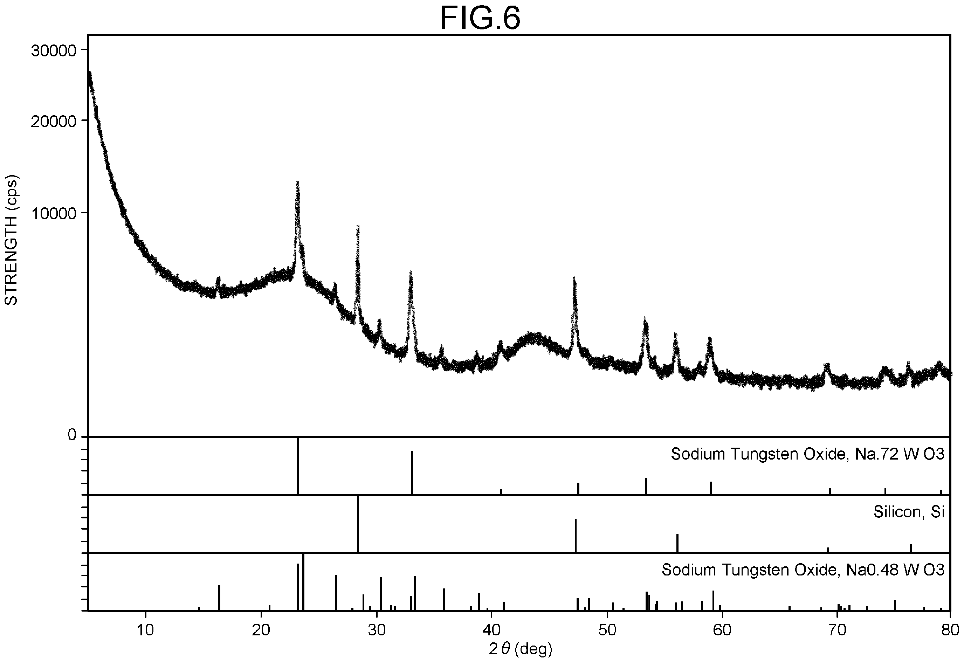

The negative electrode material produced in each example was subjected to XRD to identify the chemical formula and crystal structure of sodium tungstate included in the negative electrode material. The measurement results of XRD are illustrated in FIG. 6. Note that as the measurement conditions of XRD, the conditions described in the above embodiment were used.

FIG. 6 illustrates measurement results of XRD of the negative electrode material in Example 2. As illustrated in FIG. 6, XRD measurement shows that the negative electrode material of Example 2 includes cubic Na_{0.72}WO₃ and tetragonal Na_{0.48}WO₃. In addition, it can also be seen that Si is contained. The samples other than Example 2 also contain Si, but are omitted in the following description. Similarly, the negative electrode material of Example 1 was found to contain cubic Na_{0.78}WO₃ and tetragonal Na_{0.48}WO₃, the negative electrode material of Example 3 was found to contain cubic Na_{0.44}WO₃ and triclinic Na₅(W₁₄O₄₄), the negative electrode material of Example 4 was found to contain cubic Na_{0.49}WO₃ and tetragonal Na_{0.33}WO₃, the negative electrode materials of Examples 5 and 6 were found to contain tetragonal Na_{0.48}WO₃, and the negative electrode material of Example 7 was found to contain cubic Na₂WO₄, by XRD measurement.

The negative electrode material produced in each example was observed by an SEM. As shown in the observation results of the SEM, it can be seen that sodium tungstate is provided on the surface of the carbon in Examples 1 to 7.

### Evaluation Results

As the evaluation of the negative electrode material of each example, the capacity of the negative electrode using the negative electrode material was measured. Specifically, a current value per 1 g (mAh/g) when the C-rate was 0.2 and a current value per 1 g (mAh/g) when the C-rate was 3.2 were measured. For example, the current value of the negative electrode per 1 g when the C-rate is 0.2 refers to a current value that consumes a rated capacity in 5 hours.

FIG. 5 illustrates evaluation results. As illustrated in FIG. 5, it is found that in Examples 1 to 7 in which sodium tungstate is provided on the surface of the carbon, the battery characteristics at 0.2 C and the battery characteristics at 3.2 C are improved as compared with Comparative Example 1 in which sodium tungstate is not included.

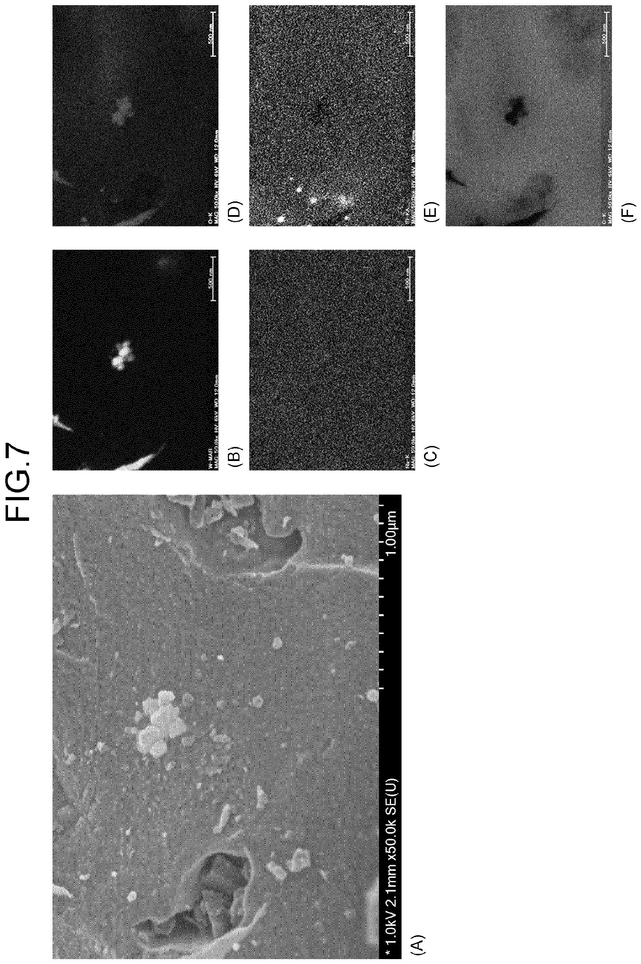

FIGS. 7 to 10 illustrate photographs and elemental analysis results obtained by imaging the negative electrode material of Example 1 with an SEM. As illustrated in FIGS. 7 to 10, the SEM photographs show that the surfaces of the carbon particles 30 are scaly. In each of FIGS. 7 to 10, (A) on the left side is an SEM photograph, and the right side is an element analysis result. The upper left part (B) of the element analysis result is a tungsten distribution image, the middle left part (C) is a sodium distribution image, the upper right part (D) is an oxygen distribution image, the middle right part (E) is a silicon distribution image, and the lower right part (F) is a carbon distribution image.

In FIG. 7, tungsten and silicon do not overlap on the surface of the carbon particle 30. Sodium has a slightly higher concentration at the position of tungsten in the middle of the photograph.

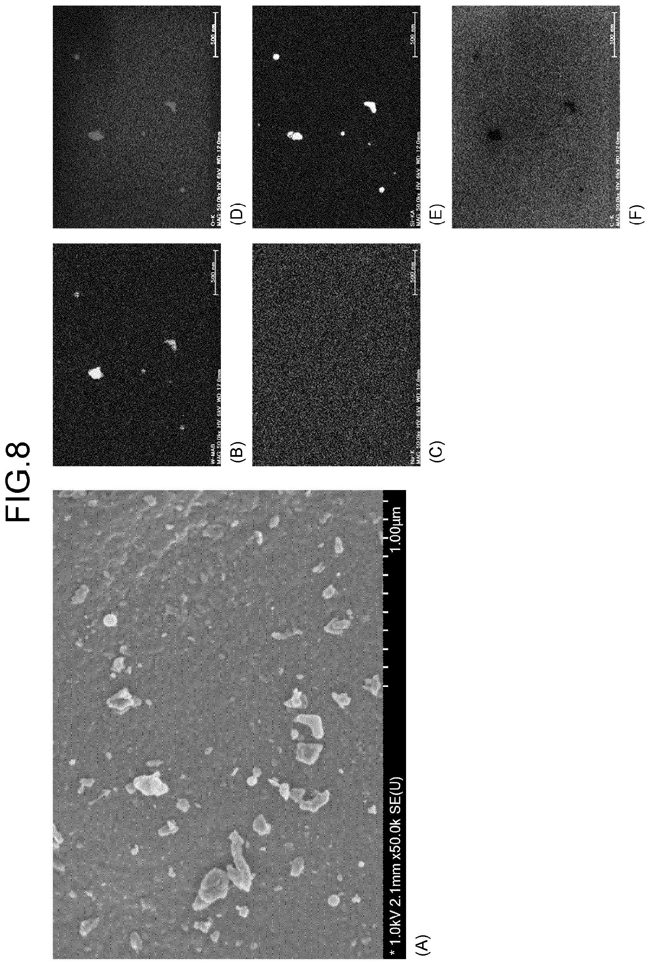

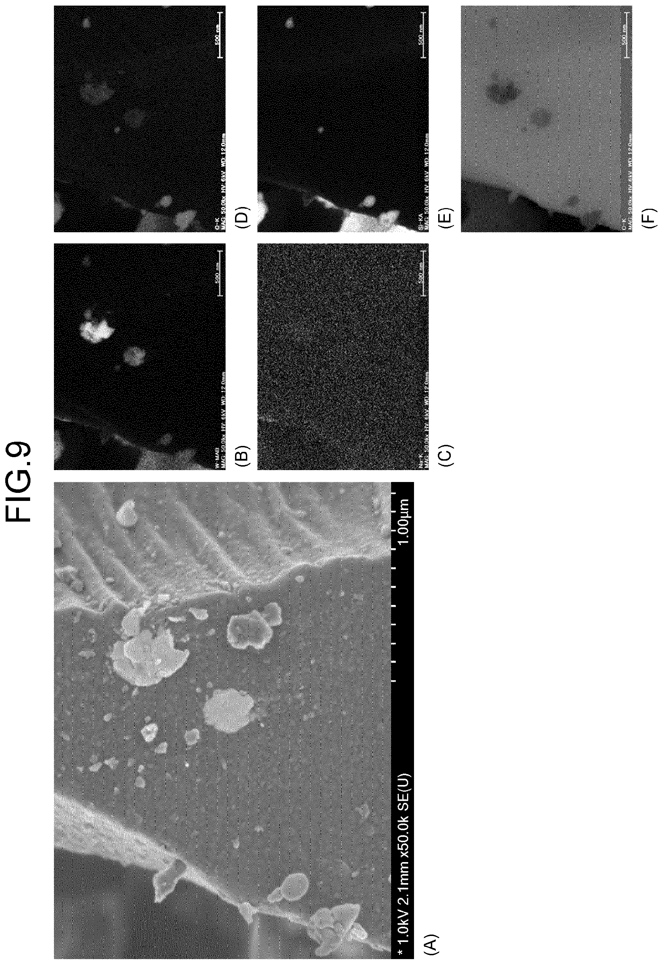

In FIGS. 8 and 9, tungsten and silicon overlap on the surface of the carbon particle 30. In FIG. 9, the concentration of sodium is slightly high at the upper right position where the concentration of tungsten is high.

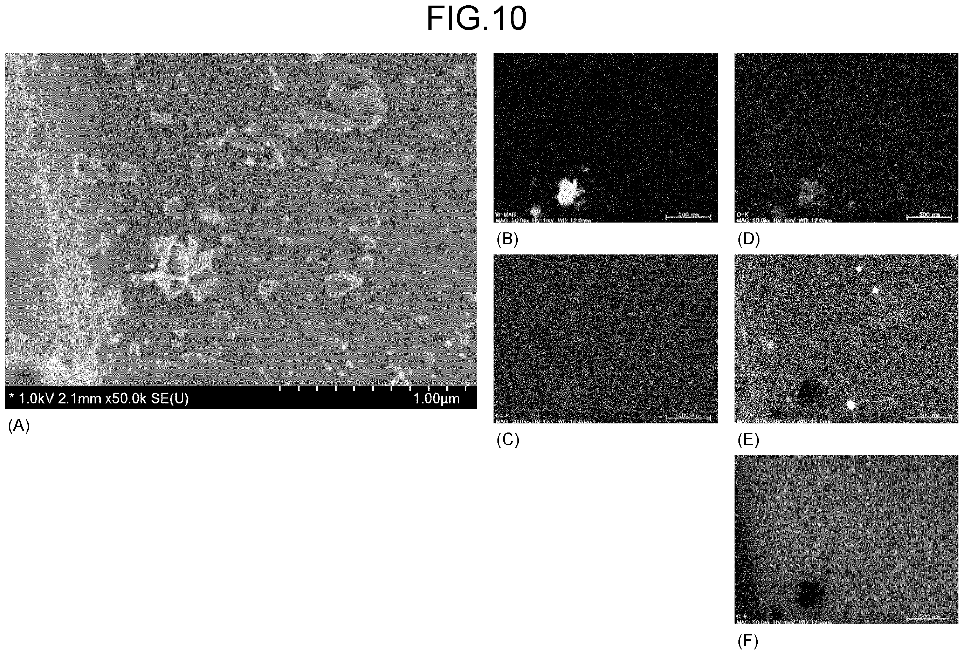

In FIG. 10, a large number of particles other than tungsten and silicon are attached to the surface of carbon particle 30. On the surface of the carbon particle 30, there are particles in which tungsten and silicon overlap and particles in which tungsten and silicon do not overlap. The concentration of sodium is slightly high at the upper left position where the concentration of tungsten is high.

Although the embodiments of the present invention have been described above, the embodiments are not limited by the contents of the embodiments. In addition, the constituent elements described above include those that can be easily assumed by those skilled in the art or those that are substantially the same. Furthermore, the constituent elements described above can be appropriately combined. Furthermore, various omissions, substitutions, or changes in the constituent elements can be made without departing from the gist of the embodiments described above.

### Reference Signs List

- 1: Battery

- 14: Negative electrode
- 22: Negative electrode material layer
- 30: Carbon particle
- 32: NaₓWO_{y}
- 33: Silicon particle

## Claims

1. A negative electrode material for a battery, comprising:
carbon;
sodium tungstate provided on a surface of the carbon; and
silicon provided on the surface of the carbon.

2. The negative electrode material according to claim 1, wherein the carbon, the sodium tungstate, and the silicon are made into a composite.

3. The negative electrode material according to claim 1 or 2, wherein the carbon and the sodium tungstate are made into a composite, and the carbon and the silicon are made into a composite.

4. The negative electrode material according to any one of claims 1 to 3, wherein the carbon is amorphous carbon or graphite.

5. The negative electrode material according to any one of claims 1 to 4, wherein the sodium tungstate has at least one of a tetragonal crystal structure and a cubic crystal structure.

6. The negative electrode material according to claim 5, wherein the sodium tungstate has a triclinic crystal structure.

7. The negative electrode material according to any one of claims 1 to 6, wherein a content of sodium is 0.01% or more and 0.5% or less in terms of a mass ratio, a content of tungsten is 1% or more and 20% or less in terms of a mass ratio, a content of oxygen is 1% or more and 15% or less in terms of a mass ratio, and a content of silicon is 1% or more and 15% or less in terms of a mass ratio, as measured by fluorescent X-ray analysis.

8. The negative electrode material according to any one of claims 1 to 7, wherein the sodium tungstate is represented by a chemical formula of NaₓWO_{y}, where x is more than 0 and 1 or less, and y is 2 or more and 4 or less.

9. The negative electrode material according to any one of claims 1 to 8, wherein Na/W that is a content ratio of sodium to tungsten is 0.001 or more and 0.2 or less as measured by fluorescent X-ray analysis.

10. The negative electrode material according to any one of claims 1 to 9, wherein Si/C that is a content ratio of silicon to carbon is 0.01 or more and 0.3 or less as measured by fluorescent X-ray analysis.

11. The negative electrode material according to any one of claims 1 to 10, wherein W/C that is a content ratio of tungsten to carbon is 0.005 or more and 0.3 or less as measured by fluorescent X-ray analysis.

12. The negative electrode material according to any one of claims 1 to 11, wherein Si/W that is a content ratio of silicon to tungsten is 0.1 or more and 15 or less as measured by fluorescent X-ray analysis.

13. The negative electrode material according to any one of claims 1 to 12, wherein Si/O that is a content ratio of silicon to oxygen is 0.1 or more and 2 or less as measured by fluorescent X-ray analysis.

14. The negative electrode material according to any one of claims 1 to 13, comprising, as the sodium tungstate, at least one of Na_{0.78}WO₃, Na_{0.48}WO₃, Na_{0.72}WO₃, Na_{0.44}WO₃, Na_{0.52}WO₃, Na₂WO₄, and Na₅W₁₄O₄₄.

15. A battery comprising:
the negative electrode material according to any one of claims 1 to 14; and
a positive electrode material.

16. A method for producing a negative electrode material for a battery, the method comprising the steps of:
adding silicon to a first solution containing sodium in which a surfactant is dissolved, to produce a second solution in which silicon is dispersed in the first solution;
adding carbon to the second solution to produce a third solution in which carbon is dispersed in the second solution;
mixing the third solution and a tungsten solution containing oxygen and tungsten to produce a fourth solution; and
producing a negative electrode material by removing a liquid component of the fourth solution.

17. The method for producing a negative electrode material according to claim 16, wherein a ratio of an amount of the silicon added in the first solution to an amount of the carbon added in the second solution is 1% or more and 10% or less in terms of a mass ratio.

18. The method for producing a negative electrode material according to claim 16 or 17, wherein the step of producing the negative electrode material includes:
a drying step of drying the fourth solution to produce a negative electrode intermediate; and
a heating step of heating the negative electrode intermediate.

19. The method for producing a negative electrode material according to claim 18, wherein the heating step includes the steps of:
heating the negative electrode intermediate to a first temperature of 150°C or higher and 625°C or lower at a first heating rate;
heating the negative electrode intermediate heated to the first temperature, to a second temperature of 680°C or higher and 750°C or lower at a second heating rate higher than the first heating rate; and
holding the negative electrode intermediate at the second temperature.

20. A method for producing a battery, the method comprising:
the method for producing a negative electrode material according to any one of claims 16 to 19; and
a step of producing a positive electrode material.
